# EUROPÄISCHE PATENTSCHRIFT

(11) **EP 2 240 701 B1**
(45) Veröffentlichungstag und Bekanntmachung des Hinweises auf die Patenterteilung: **02.10.2013**
(21) Anmeldenummer: 08869549.9
(22) Anmeldetag: 11.12.2008
(51) Int. Cl.: F16B 37/08

(54) **EINGRIFFSEINHEIT ZUM AUFSTECKEN UND ZUM EINGRIFF MIT EINEM GEWINDEBOLZEN**
ENGAGEMENT UNIT FOR ATTACHING AND FOR ENGAGING A THREADED BOLT
UNITÉ D'ENGAGEMENT À EMBOÎTER ET À ENGAGER SUR UN BOULON FILETÉ

(30) Priorität: 10.01.2008 DE 102008003884
(43) Veröffentlichungstag der Anmeldung: 20.10.2010
(73) Patentinhaber: A. RAYMOND ET CIE, 38000 Grenoble (FR)
(72) Erfinder: BÜSCH, Martin, 79588 Efringen-Kirchen (DE)
(74) Vertreter: RACKETTE Partnerschaft Patentanwälte
(86) Internationale Anmeldenummer: PCT/EP2008/010507
(87) Internationale Veröffentlichungsnummer: WO 2009/086877

(56) Entgegenhaltungen:
- EP-A- 1 538 350

## Beschreibung

Die Erfindung betrifft eine Eingriffseinheit zum Aufstecken und zum Eingriff mit einem Gewindebolzen gemäß dem Oberbegriff des Patentanspruches 1.

Eine derartige Eingriffseinheit ist aus EP 1 538 350 A1 bekannt. Die vorbekannte Eingriffseinheit zum Aufstecken und zum Eingriff mit einem Gewindebolzen weist Federarme auf, an denen Rastmittel zum Eingriff mit einem Gewindebolzen ausgebildet sind. Weiterhin sind ein Innenteil und ein auf das Innenteil aufschiebbares Außenteil vor-handen. Die Federarme sind an dem Innenteil ausgebildet und in einer auf das Innenteil aufgeschobenen Endmontageanordnung des Außenteils von Federarmaufnahmen des Außenteils gegen eine Bewegung radial nach außen blockiert. Weiterhin sind an dem Innenteil und an dem Außenteil Drehmomentaufnahmemittel ausgebildet, die in der auf das Innenteil aufgeschobenen Endmontageanordnung des Außenteils zum drehfesten Verbinden des Außenteils mit dem Innenteil miteinander in Eingriff sind. An dem Außenteil ist ein zum Ansetzen eines ein Drehmoment ausübenden Werkzeugs eingerichteter Ansatzkopf ausgebildet. Weiterhin ist eine an dem Innenteil und an dem Außenteil ausgebildete Rastanordnung vorhanden, die das Außenteil in einer auf das Innenteil aufgeschobenen Endmontageanordnung in axialer Richtung an dem Innenteil entgegen der Aufschieberichtung bei dieser Eingriffseinheit unlösbar fixiert.

Eine weitere Eingriffseinheit zum Aufstecken und zum Eingriff mit einem Gewindebolzen ist aus DE 35 25 865 C1 bekannt. Diese Eingriffseinheit ist mit einer Anzahl von Federarmen ausgestattet, an denen Rastmittel zum Eingriff mit einem Gewindebolzen ausgebildet sind. Dadurch lässt sich die Eingriffseinheit in einfacher Art und Weise auf einen Gewindebolzen aufschieben.

Der Erfindung liegt die Aufgabe zugrunde, eine Eingriffseinheit der eingangs genannten Art anzugeben, die sich mit einer verhältnismäßig geringen Aufsteckkraft auf einen Gewindebolzen aufschieben, nach Abschluss des Aufschiebevorganges mit einem verhältnismäßig hohen Drehmoment zum weiteren Festdrehen beaufschlagen und einfach sowie wiederverwendbar demontieren lässt.

Diese Aufgabe wird bei einer Eingriffseinheit der eingangs genannten Art erfindungsgemäß mit den kennzeichnenden Merkmalen des Patentanspruches 1 gelöst.

Dadurch, dass bei der erfindungsgemäßen Eingriffseinheit ein Innenteil und ein auf das Innenteil aufschiebbares Außenteil vorhanden sind, die so aufeinander angepasst sind, dass in einer auf das Innenteil aufgeschobenen Anordnung des Außenteiles die an dem Innenteil ausgebildeten Federarme gegen ein Ausweichen radial nach außen blockiert sind und sich ein auf das Außenteil aufgeübtes, verhältnismäßig hohes Drehmoment sicher auf das Innenteil überträgt, lässt sich das Innenteil in einem ersten Schritt mit einer verhältnismäßig geringen Aufsteckkraft auf einen Gewindebolzen aufschieben. Nach Aufschieben des Außenteiles auf das Innenteil überträgt sich das Drehmoment mit den nunmehr blockierten Federarmen wie bei einer Schraube auf das Innenteil zum Festziehen der Eingriffseinheit, und nach Lösen der Rasthaken aus den Rastausnehmungen lässt sich die Eingriffseinheit auch aus der Endmontageanordnung heraus wiederverwendbar und insbesondere auch verschleissarm demontieren.

Weitere zweckmäßige Ausgestaltungen der Erfindung sind Gegenstand der Unteransprüche.

Weitere zweckmäßige Ausgestaltungen und Vorteile der Erfindung sind Gegenstand der nachfolgenden Beschreibung eines Ausführungsbeispiels unter Bezug auf die Figuren der Zeichnung. Es zeigen:
- Fig. 1: in einer perspektivischen Ansicht ein Ausführungsbeispiel einer erfindungsgemäßen Eingriffseinheit mit einem Innenteil und mit einem Außenteil, die in einer Vormontageanordnung in Längsrichtung in einem Abstand voneinander angeordnet und miteinander verbunden sind,
- Fig. 2: in einem Längsschnitt das Ausführungsbeispiel gemäß Fig. 1 in der Vormontageanordnung,
- Fig. 3: in einem Längsschnitt das Ausführungsbeispiel gemäß Fig. 1 und Fig. 2 in einer Endmontageanordnung auf einem Gewindebolzen und
- Fig. 4: in einer perspektivischen geschnittenen Ansicht das Ausführungsbeispiel gemäß Fig. 1 bis Fig. 3 in der Endmontageanordnung gemäß Fig. 3.

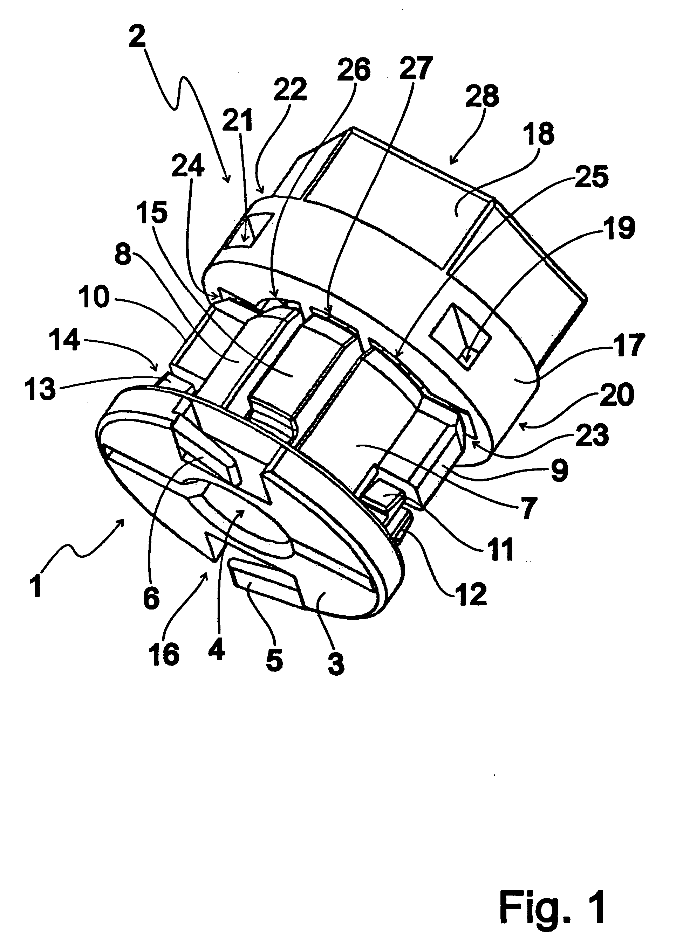

Fig. 1 zeigt in einer perspektivischen Ansicht ein Ausführungsbeispiel einer erfindungsgemäßen Eingriffseinheit, die über ein Innenteil 1 und über ein Außenteil 2 verfügt.

Das Innenteil 1 ist mit einem scheibenartigen rundlichen Auflageteller 3 ausgestattet, der über eine mittig angeordnete Einführausnehmung 4 zum Einführen eines in Fig. 1 nicht dargestellten Gewindebolzens verfügt. An dem Auflageteller 3 sind vorteilhafterweise, aber nicht notwendigerweise weiterhin diametral einander gegenüberliegende Vorspannzungen 5, 6 ausgebildet, die sich in Umfangsrichtung erstrecken und in einer in Fig. 1 dargestellten relaxierten Anordnung in axialer Richtung über die in der Darstellung gemäß Fig. 1 dem Betrachter zugewandte Unterseite des Auflagetellers 3 über-stehen.

Weiterhin ist das Innenteil 1 mit zwei Innenkörpern 7, 8 von in der gemeinsamen umspannenden Grundform zylinderförmiger Gestalt mit einem gegenüber dem Auflageteller 3 kleinerem Durchmesser ausgebildet, die sich in eine den Vorspannzungen 5, 6 abgewandten Richtung von dem Auflageteller 3 wegweisend erstrecken. Der Außenumfang der Innenkörper 7, 8 ist kleiner als der Außenumfang des Auflagetellers 3.

An jedem Innenkörper 7, 8 sind quaderförmige Randblöcke 9, 10 angeformt, die sich diametral einander gegenüberliegen, sich mit ihrer langen Seite in Längsrichtung des Innenteiles 1 erstrecken und in einem Abstand von dem Auflageteller 3 angeordnet sind. Zwischen den dem Auflageteller 3 zugewandten Enden der Randblöcke 9, 10 und dem Auflageteller 3 ist jeweils ein Paar von einander gegenüberliegenden Rasthaken 11, 12, 13, 14 ausgebildet. Die Rasthaken 11, 12, 13, 14 sind dabei nach außen gewandt und stehen über die rechtwinklig zur Umfangsrichtung liegenden Flachseiten der Randblöcke 9, 10 vor.

Weiterhin verfügt das Innenteil 1 bei dem dargestellten Ausführungsbeispiel über zwei einander diametral gegenüberliegende Federarme 15, 16, die jeweils in etwa mittig zwischen den Randblöcken 9, 10 zwischen den Innenkörpern 7, 8 angeordnet sind. Bei nicht dargestellten Ausführungsbeispiele können mehr als zwei Federarme 15, 16 vorhanden sein.

Das Außenteil 2 weist eine scheibenartige kreisförmige Außenhülse 17 und einen an der Außenhülse 17 angeformten Ansatzkopf 18 zum Übertragen eines Drehmomentes auf, der zum Eingriff mit einem üblichen Werkzeug beispielsweise wie in Fig. 1 dargestellt als Außensechskant oder mit einer anderen Geometrie ausgebildet ist. In der Außenhülse 17 sind paarweise einander gegenüberliegende Rastausnehmungen 19, 20, 21, 22 eingebracht, die sich paarweise miteinander fluchtend durch die Außenhülse 17 erstrecken und jeweils zum Eingriff mit einem Rasthaken 11, 12, 13, 14 ausgebildet sind.

Weiterhin lässt sich Fig. 1 entnehmen, dass das Außenteil 2 zum einen mit Randblockaufnahmen 23, 24 zur in Umfangsrichtung passgenauen Aufnahme der Randblöcke 9, 10, mit Innenkörperaufnahmen 25, 26 zur Aufnahme der Innenkörper 7, 8 und mit Federarmaufnahmen 27, 28 zur in radialer Richtung und in Umfangrichtung passgenauen Aufnahme der Federarme 15, 16 ausgebildet ist.

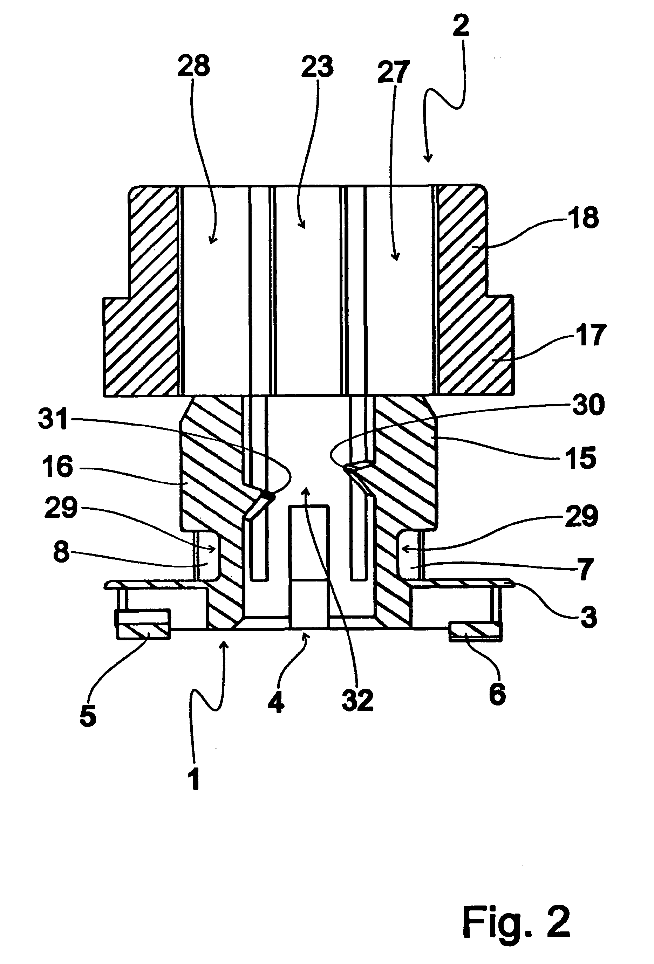

Fig. 2 zeigt in einem Längsschnitt das Ausführungsbeispiel gemäß Fig. 1, wobei die Schnittebene mittig durch die Federarme 15, 16 gelegt ist. Aus Fig. 2 ist ersichtlich, dass die Federarme 15, 16 jeweils durch einen Federabschnitt 29 mit gegenüber den übrigen Bereichen der Federarme geringeren Materialstärke, der nahe des Auflagetellers 3 liegt, in radialer Richtung federnd ausgebildet ist. Jeder Federarm 15, 16 weist als Rastmittel eine Rastnase 30, 31 auf, die radial nach innen in einen von den Innenkörpern 7, 8 und den Federarmen 15, 16 umschlossenen Gewindebolzenaufnahmeraum 32 eintreten. Bei nicht dargestellten Ausführungsbeispielen weist jeder Federarm 15, 16 als Rastmittel mehr als eine Rastnase 30, 31 auf.

Weiterhin lässt sich Fig. 2 entnehmen, dass in der in Fig. 1 und Fig. 2 dargestellten Vormontageanordnung das Innenteil 1 sowie das Außenteil 2 in axialer Richtung in einem Abstand voneinander angeordnet. Beispielsweise können das Innenteil 1 und das Außenteil 2 über wenigstens eine in Fig. 1 sowie Fig. 2 nicht dargestellte Anbindung, die gegenüber Schubkräften verhältnismäßig widerstandsarm ist, miteinander verbunden oder als zwei Einzelteile vormontiert sein. Die Randblockaufnahmen 23, 24, die Innenkörperaufnahmen 25, 26 und die Federarmaufnahmen 27, 28 erstrecken sich bei dem in Fig. 1 und Fig. 2 dargestellten Ausführungsbeispiel in Längsrichtung vollständig durch das Außenteil 2, so dass das Außenteil 2, gegebenenfalls nach Zerstören der oder jeder Anbindung, in Längsrichtung in Bezug auf das Innenteil 1 verschiebbar ist, bis die Außenhülse 17 an dem Auflageteller 3 anliegt.

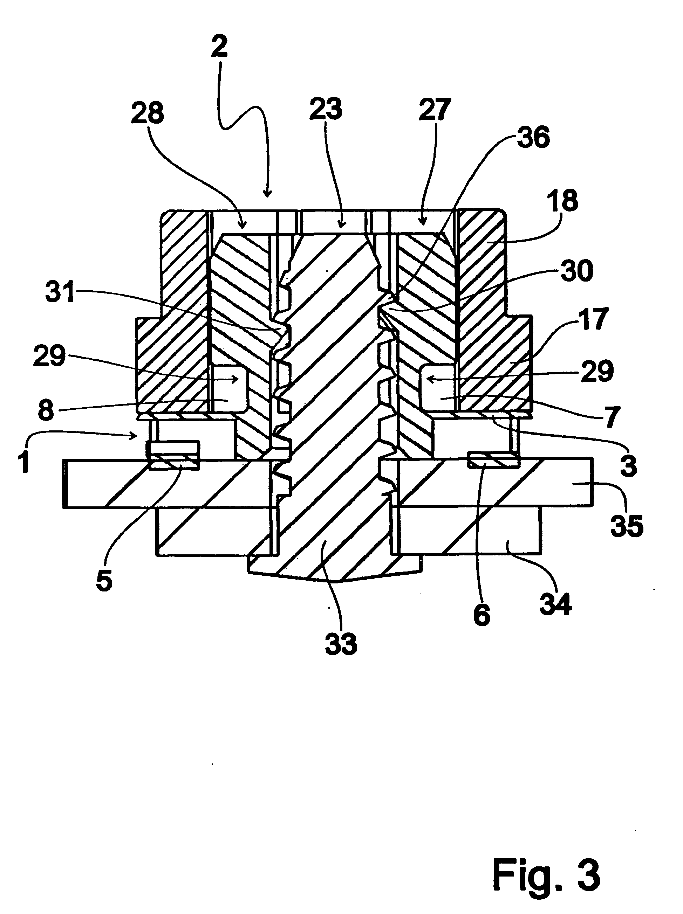

Fig. 3 zeigt in einem Längsschnitt durch die Ebene, in der die Feder-arme 15, 16 liegen, das Ausführungsbeispiel gemäß Fig. 1 und Fig. 2 in einer Endmontageanordnung im Eingriff mit einem Gewindebolzen 33, der an einem Trägerteil 34 befestigt ist. Aus Fig. 3 ist ersichtlich, dass beispielsweise zum Befestigen eines Anbauteiles 35 an dem Trägerteil 34, durch das der Gewindebolzen 33 durchgreift, bei Aufschieben des Innenteiles 1 mittels eines stirnseitig an der radial über den Ansatzkopf 18 überstehenden Außenhülse anliegenden Hub-Dreh-Werkzeugs in der in Fig. 1 sowie Fig. 2 dargestellten Vormontageanordnung die Federarme 15, 16 bei Kontakt der Rastnasen 30, 31 mit dem Gewindebolzen 33 bei Überfahren einer an dem Gewindebolzen 33 ausgebildeten Außengewindestruktur 36 nach außen ausfedern, bis der Auflageteller 3 schließlich an dem Anbauteil 35 aufliegt. Dabei schaffen die Vorspannzungen 5, 6 einen Höhenausgleich, indem sie das Innenteil 1 mit einer gewissen Vorspannkraft in einer Lage halten, in der die Rastnasen 30, 31 die Außengewindestruktur 36 hintergreifen.

In dieser aufgeschobenen Anordnung der erfindungsgemäßen Eingriffseinheit wird das Außenteil 2 ausgehend von der in Fig. 1 und Fig. 2 dargestellten Vormontageanordnung auf das Innenteil 1 in Längsrichtung aufgeschoben, bis die Außenhülse 17 auf dem Auflageteller 3 aufliegt. In dieser Endmontageanordnung sind, wie in Fig. 3 ersichtlich ist, die Federarme 15, 16 durch Anliegen an der radial nach außen weisenden Wand der Federarmaufnahmen 27, 28 gegen ein Ausfedern radial nach außen sowie durch Anliegen an die in Umfangsrichtung seitlich neben den Federarmen 15,16 liegenden Enden der Federarmaufnahmen 27, 28 gesichert, so dass ein zuver-lässiger Eingriff der Rastnasen 30, 31 mit der Außengewindestruktur 36 eine hohe Auszugskraft sicherstellt.

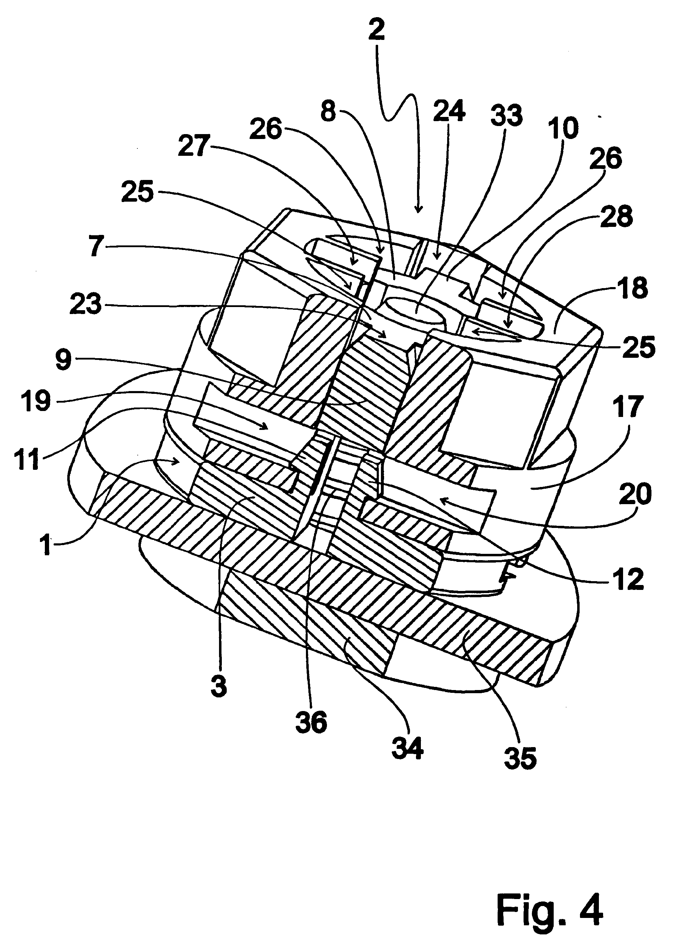

Fig. 4 zeigt in einer perspektivischen Ansicht das Ausführungsbeispiel einer erfindungsgemäßen Eingriffseinheit gemäß Fig. 1 bis Fig. 3 in der Endmontageanordnung gemäß Fig. 3 in einem Längsschnitt durch einen Randblock 9, wobei die Schnittebene parallel zu der radial nach außen weisenden Flachseite des Randblockes 9 liegt und durch die zwischen diesem Randblock 9 und dem Auflageteller 3 angeordneten Rasthaken 11, 12 durchtritt. Aus Fig. 4 ist ersichtlich, dass die Rasthaken 11, 12 von außen beispielsweise mit einem länglichen Gegenstand zugänglich sind, so dass bei Ausüben einer entsprechenden Kraft auf die Rasthaken 11, 12, 13, 14 der Eingriff der Rasthaken 11, 12, 13, 14 mit den Rastausnehmungen 19, 20, 21, 22 gelöst und das Außenteil 2 durch Bewegen von dem Auflageteller 3 weg wieder von dem Innenteil 1 abgezogen werden kann.

Weiterhin lässt sich Fig. 4 entnehmen, dass die Randblöcke 9, 10 mit ihren in Umfangsrichtung außen liegenden Flachseiten an den ihnen gegenüberliegenden Flachseiten der Randblockaufnahmen 23, 24 anliegen, so dass bei Ausüben eines Drehmomentes auf den Ansatzkopf 18 beispielsweise durch Ansetzen eines Werkzeuges über den Eingriff der Randblöcke 9, 10 mit dem Außenteil 2 das Drehmoment auf das Innenteil 1 übertragen wird und die erfindungsgemäße Eingriffseinheit ähnlich wie eine Schraube angezogen werden kann, um das Anbauteil 35 mit einer gewissen Andruckkraft an dem Trägerteil 34 zu befestigen. Weiterhin lässt sich bei Ausüben eines entsprechenden der Gewinderichtung des Außengewindestruktur 36 gegenläufigen Drehmoments die erfindungsgemäße Eingriffseinheit wie eine Mutter im Servicefall abschrauben, damit das Anbauteil 35 von dem Trägerteil 34 abgenommen werden kann. Zweckmäßigerweise wird dann das Außenteil 2 wie oben beschrieben von dem Innenteil 1 entfernt, um die erfindungsgemäße Eingriffseinheit wieder bestimmungsgemäß verwenden zu können.

## Patentansprüche

1. Eingriffseinheit zum Aufstecken und zum Eingriff mit einem Gewindebolzen (33), mit Federarmen (15, 16), an denen Rast-mittel (30, 31) zum Eingriff mit dem Gewindebolzen (33) ausgebildet sind, mit einem Innenteil (1) und mit einem auf das Innenteil (1) aufschiebbaren Außenteil (2), wobei die Federarme (15, 16) an dem Innenteil (1) ausgebildet und in einer auf das Innenteil (1) aufgeschobener Endmontageanordnung des Außenteils (2) von Federarmaufnahmen (27, 28) des Außenteils (2) gegen eine Bewegung radial nach außen blockiert sind, wobei an dem Innenteil (1) und an dem Außenteil (2) Drehmomentaufnahmemittel (9, 10, 23, 24) ausgebildet sind, die in der auf das Innenteil (1) aufgeschobenen Endmontageanordnung des Außenteils (2) zum drehfesten Verbinden des Außenteils (2) mit dem Innenteil (1) miteinander in Eingriff sind und wobei an dem Außenteil (2) ein zum Ansetzen eines ein Drehmoment ausübenden Werkzeugs eingerichteter Ansatzkopf (18) ausgebildet ist, und mit einer an dem Innenteil (1) und an dem Außenteil (2) ausgebildeten Rastanordnung (11 bis 14, 19 bis 22), die das Außenteil (2) in einer auf das Innenteil (2) aufgeschobenen Endmontageanordnung in axialer Richtung entgegen der Aufschieberichtung an dem Innenteil (1) fixiert, **dadurch gekennzeichnet, dass** die Rastanordnung an dem Innenteil (1) ausgebildete Rasthaken (11, 12, 13, 14) und an dem Außenteil (2) ausgebildete Rastausnehmungen (19, 20, 21, 22) aufweist, in die die Rasthaken (11, 12, 13, 14) in der Endmontageanordnung eingreifen, und dass die Rastausnehmungen (19, 20, 21, 22) nach außen geöffnet sowie die Rasthaken (11, 12, 13, 14) von außen zugänglich sind, um den Eingriff mit den Rastausnehmungen (19, 20, 21, 22) lösen zu können.

2. Eingriffseinheit nach Anspruch 1, **dadurch gekennzeichnet, dass** das Außenteil (2) über eine Außenhülse (17) verfügt, in der die Rastausnehmungen (19, 20, 21, 22) ausgebildet sind.

3. Eingriffseinheit nach Anspruch 1 oder Anspruch 2, **dadurch gekennzeichnet, dass** die Drehmomentaufnahmemittel durch an dem Innenteil (1) ausgebildete, außenseitig überstehende Randblöcke (9, 10) und an dem Außenteil (2) komplementär zu den Randblöcken (9, 10) ausgebildete Randblockaufnahmen (23, 24) gebildet sind.

4. Eingriffseinheit nach einem der Ansprüche 1 bis 3, **dadurch gekennzeichnet, dass** das Innenteil (1) in Längsrichtung entgegen der Aufsteckrichtung wirkende Vorspannmittel (5, 6) aufweist.

5. Eingriffseinheit nach Anspruch 4, **dadurch gekennzeichnet, dass** die Vorspannmittel durch von dem Innenteil (1) weg weisende Vorspannzungen (5, 6) gebildet sind.

## Claims

1. Engagement unit for attaching and for engaging a threaded bolt (33), comprising sprung arms (15, 16) at which locking means (30, 31) for engaging the threaded bolt (33) are provided and comprising an inner part (1) and an outer part (2) which can be pushed onto the inner part (1), wherein the sprung arms (15, 16) are provided at the inner part (1) and, in a final assembly arrangement of the outer part (2) pushed onto the inner part (1), are blocked by sprung arm receptacles (27, 28) of the outer part (2) against a radial outward movement, wherein provided at the inner part (1) and at the outer part (2) are torque absorbing means (9, 10, 23, 24), which are in engagement with one another in the final assembly arrangement of the outer part (2) pushed onto the inner part (1) for twistproof connection of the outer part (2) to the inner part (1) and wherein an attaching head (18) for placement of a tool for exerting a torque is provided at the outer part (2), also comprising a locking arrangement (11 to 14, 19 to 22) provided at the inner part (1) and the outer part (2), said locking arrangement fixing the outer part (2) onto the inner part (1) in a final assembly arrangement pushed onto the inner part (1) in the axial direction against the pushing-on direction, **characterised in that** the locking arrangement has locking hooks (11, 12, 13, 14) formed at the inner part (1) and locking recesses (19, 20, 21, 22) formed at the outer part (2) into which the locking hooks (11, 12, 13, 14) engage in the final assembly arrangement and that the locking recesses (19, 20, 21, 22) are outwardly open and the locking hooks (11, 12, 13, 14) are accessible from outside in order to be able to release the engagement with the locking recesses (19, 20, 21, 22).

2. Engagement unit according to claim 1, **characterised in that** the outer part (2) has an outer sleeve (17) in which the locking recesses (19, 20, 21, 22) are formed.

3. Engagement unit according to claim 1 or claim 2, **characterised in that** the torque absorbing means are formed by edge blocks (9, 10) provided at the inner part (1) and protruding outwardly and by edge block receptacles (23, 24) provided at the outer part (2) to be complementary to the edge blocks (9, 10).

4. Engagement unit according to one of the claims 1 to 3, **characterised in that** the inner part (1) has pre-tensioning means (5, 6) acting in the longitudinal direction against the pushing-on direction.

5. Engagement unit according to claim 4, **characterised in that** the pre-tensioning means are provided by pre-tensioning lugs (5, 6) facing away from the inner part (1).

## Revendications

1. Unité de mise en prise d'accrochage destinée à être emmanchée sur et mise en prise d'engagement avec un goujon fileté (33), comprenant des segments élastiques (15, 16) qui sont munis de moyens d'accrochage (30, 31) destinés à venir en prise d'engagement avec le goujon fileté (33), comprenant un élément intérieur (1) et un élément extérieur (2) destiné à être poussé en position d'emmanchement sur l'élément intérieur (1), dans lequel les segments élastiques (15, 16) font partie intégrante de l'élément intérieur (1) et, dans l'agencement de montage final de l'élément extérieur (2) poussé en position d'emmanchement sur l'élément intérieur (1), sont empêchés de se déplacer dans le plan radial vers l'extérieur par des logements de réception de segments élastiques (27, 28) ménagés à cet effet dans l'élément extérieur (2), dans lequel l'élément intérieur (1) et l'élément extérieur (2) comportent des moyens permettant l'application d'un couple de serrage (9, 10, 23, 24) qui, dans l'agencement de montage final de l'élément extérieur (2) poussé en position d'emmanchement sur l'élément intérieur (1), sont en prise d'encastrement réciproque pour assembler l'élément extérieur (2) avec l'élément intérieur (1) en les immobilisant en rotation l'un par rapport à l'autre et dans lequel il est prévu, sur l'élément extérieur (2), une tête formant embout (18) agencée pour permettre la mise en prise d'un outil exerçant un couple de rotation, et comprenant un agencement de mise en prise d'encastrement (11 à 14, 19 à 22), ménagé sur l'élément intérieur (1) et sur l'élément extérieur (2), qui immobilise l'élément extérieur (2), dans son agencement de montage final poussé en position d'emmanchement sur l'élément intérieur (1), en position sur l'élément intérieur (1) dans le plan axial contrairement au sens de l'emmanchement, **caractérisé en ce que** l'agencement de mise en prise d'encastrement se compose de crochets formant crans d'arrêt (11, 12, 13, 14) ménagés sur l'élément intérieur (1) et de logements d'insertion (19, 20, 21, 22) ménagés dans l'élément extérieur (2), dans lesquels les crochets formant crans d'arrêt (11, 12, 13, 14) viennent s'engager en prise dans l'agencement de montage final et **en ce que** les logements d'insertion (19, 20, 21, 22) sont ouverts vers l'extérieur et également que les crochets formant crans d'arrêt (11, 12, 13, 14) sont accessibles depuis l'extérieur pour pouvoir ainsi les désolidariser de leur emprise d'encastrement avec les logements d'insertion (19, 20, 21, 22).

2. Unité de mise en prise d'accrochage selon la revendication 1, **caractérisée en ce que** l'élément extérieur (2) comporte une douille extérieure (17) dans laquelle les logements d'insertion (19, 20, 21, 22) sont ménagés.

3. Unité de mise en prise d'accrochage selon la revendication 1 ou la revendication 2, **caractérisée en ce que** les moyens permettant l'application d'un couple de serrage sont constitués par des plots de rive (9, 10) faisant saillie vers l'extérieur, prévus sur l'élément intérieur (1) et par des logements d'insertion de plots de rive (23, 24) ménagés dans l'élément extérieur (2) en correspondance d(accouplement avec les plots de rive (9, 10).

4. Unité de mise en prise d'accrochage selon l'une des revendications 1 à 3, **caractérisée en ce que** l'élément intérieur (1) comporte des moyens de mise en état de précontrainte exerçant cette action dans le plan longitudinal dans le sens contraire de celui de l'emmanchement.

5. Unité de mise en prise d'accrochage selon la revendication 4, **caractérisée en ce que** les moyens de mise en état de précontrainte sont constitués par des languettes de mise en précontrainte (5, 6) qui s'étendent vers l'extérieur depuis l'élément intérieur (1).
